(19) Europäisches Patentamt
European Patent Office
Office européen des brevets

(11) EP 3 283 547 B1

(12) EUROPEAN PATENT SPECIFICATION

(45) Date of publication and mention of the grant of the patent:
**19.05.2021 Bulletin 2021/20**

(21) Application number: **16716207.2**

(22) Date of filing: **13.04.2016**

(51) Int Cl.:
***C08G 64/18*** *(2006.01)* ***C08G 64/34*** *(2006.01)*
***C08G 65/26*** *(2006.01)* ***C08L 69/00*** *(2006.01)*

(86) International application number:
**PCT/EP2016/058130**

(87) International publication number:
**WO 2016/166165 (20.10.2016 Gazette 2016/42)**

# (54) NEW FORMULATIONS FOR POLYURETHANE APPLICATIONS

NEUE FORMULIERUNGEN FÜR POLYURETHANANWENDUNGEN

NOUVELLES FORMULATIONS POUR DES APPLICATIONS DE POLYURÉTHANE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.04.2015 EP 15382178**

(43) Date of publication of application:
**21.02.2018 Bulletin 2018/08**

(73) Proprietor: **Repsol, S.A.**
**28045 Madrid (ES)**

(72) Inventors:
- **GARCÍA RUIZ, Mónica**
  **E-28935 Móstoles-Madrid (ES)**
- **RUIZ ORTA, Carolina**
  **E-28935 Móstoles- Madrid (ES)**
- **SEGURA FERNÁNDEZ, Sonia**
  **E-28935 Móstoles- Madrid (ES)**
- **MARÍN PERALES, Laura**
  **E-28935 Móstoles- Madrid (ES)**
- **GALDÁMEZ PEÑA, Román**
  **E-28935 Móstoles- Madrid (ES)**
- **BLANCO GONZÁLEZ, María Dolores**
  **E-28935 Móstoles- Madrid (ES)**
- **DOMÍNGUEZ RAMOS, Enrique**
  **E-28935 Móstoles- Madrid (ES)**

(74) Representative: **ABG Intellectual Property Law, S.L.**
**Avenida de Burgos, 16D**
**Edificio Euromor**
**28036 Madrid (ES)**

(56) References cited:
**US-A1- 2014 187 660**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 283 547 B1

## Description

### FIELD OF THE INVENTION

The present invention refers to compositions suitable for the preparation of polyurethane for a variety of applications and, in particular, it relates to mixtures of polypropylene carbonate and polyether carbonate polyol.

### BACKGROUND

Polyurethanes (PUs) have been known for a long time and used in a wide array of products and applications, such as flexible foams, rigid foams, coatings, elastomers and plastics, adhesives and surfactants among others. They are of industrial importance due to the combination ofgood mechanical properties with the known advantages of inexpensive processability.

PUs are generally made from the reaction of polyols (usually polyether and polyester polyols) and an isocyanate compound (usually an organic diisocyanate). The resulting PU is then characterized for being a segmented polymer having soft segments derived from the hydroxyl terminated polyol and hard segments derived from the isocyanate compound.

Various types of compounds for each of these reactants are disclosed in the literature. As an alternative to polyether and polyester polyols, polycarbonate polyols have also been used in the polyurethane field to produce polyurethanes. Polycarbonate polyols are commercially available and are all derived from diols (such as 1,4-butanediol, 1,6-hexane diol and the like) which react with phosgene or a reactive equivalent to produce carbonate linkages between the diol units. International patent application WO2013/138161 describes the use of polycarbonate polyols, and particularly polypropylene carbonate diol, with a high content of carbonate linkages derived from the copolymerization of $CO_2$ with one or more epoxides to produce a thermoplastic polyurethane when reacting with a di-isocyanate. Said polycarbonate polyol is characterized for having two carbon atoms between the carbonate linkages.

Polyether carbonate polyols have also been used to produce polyurethanes. There are several documents describing the preparation of polyether carbonate polyols by reactions catalized with double metal cyanide compounds.

EP 2548908 discloses the preparation of polyether carbonate polyols from alkylene oxides and carbon dioxide with a double metal cyanide (DMC) catalyst, where the DMC catalyst comprises at least one complex forming components comprising polycarbonate diol, polyethercarbonate polyol, polyethylene glycoldiol or poly(tetramethylene etherdiol).

US 2013/123532 relates to a process for the preparation of polyether carbonate polyols from alkylene oxides and carbon dioxide by means of a double metal cyanide catalyst (DMC). The presence of a certain amount of an alkaline metal hydroxide, metal carbonate and/or metal oxide in the cyanide-free metal salt, the metal cyanide salt or both the mentioned salts used for the preparation of the DMC catalyst is disclosed to improve selectivity (that is, reduce the ratio cyclic carbonate/linear polyether carbonate) and increase the catalyst activity towards $CO_2$. In this process, the DMC catalyst is obtained by a process in which the washing step is carried on with an aqueous solution of an organic complex ligand.

EP 2441788 discloses the production of polyether carbonate polyols from alkylene oxides and carbon dioxide by means of a double metal cyanide (DMC) catalyst, where the reaction is carried out in a tubular reactor.

US 2003/149323 discloses a method for the production of polyether carbonate polyols from alkylene oxides and carbon dioxide by means of a multimetal cyanide compound having a crystalline structure and a content of platelet-shaped particles of at least 30% by weight.

US 2013/0190462 relates to a process for the preparation of polyether carbonate polyols by catalytic copolymerization of carbon dioxide with alkylene oxides with the aid of double metal cyanide (DMC) catalysts and in the presence of metal salts.

In fact, polyether carbonate polyol with a high content of $CO_2$ incorporated in the backbone of the polymer are of particular interest to produce polyurethane compositions with improved properties.

On the other hand, some mixtures of polypropylene carbonate polyols and polyols, such as polyether polyols and polyester polyols, have also been described in the literature for their application in the manufacture of polyurethane compositions, particularly polyurethane foam compositions (WO2013/016331), thermoplastic polyurethane (WO2013/138161) and polyurethane adhesive compositions (WO2013/158621). However, mixtures of polycarbonate polyols with polyether carbonate polyols as those mentioned before have not been disclosed in the prior art. In order for these mixtures to be useful in the above referred polyurethane applications, a suitable miscibility is required between the components constituting the mixture. Thus, an important issue to take into consideration in the preparation of polyurethane formulations is the provision of mixtures of polyols having a good miscibility between their components.

## BRIEF DESCRIPTION OF THE INVENTION

The authors of the present invention have found that when a polyether carbonate polyol is mixed with a polypropylene carbonate, an increase in the miscibility of both components is observed when compared to mixtures having a polyether polyol without any content of $CO_2$ in its composition. This improved miscibility is critical in order to avoid collapses when said mixture is used in the preparation of polyurethane formulations.

The synergy between the increased viscosity and polarity make polyether carbonate polyols more compatible with the polypropylene carbonate than a polyether polyol having the same molecular weight and functionality in all composition ranges of the mixture.

Furthermore, the incorporation of the polyether carbonate polyol to polypropylene carbonate improves the thermal stability of polypropylene carbonate which has a degradation temperature relatively low. Surprisingly, this improved stability is remarkably higher when compared to the case in which polyether polyol without any content of $CO_2$ is incorporated in the polypropylene carbonate.

Additionally, the total content of $CO_2$ in the mixture is increased with the subsequent improvement in its sustainability.

Thus, a first aspect of the present invention relates to a mixture comprising:

a) at least 25 wt% of polyether carbonate polyol having a content of $CO_2$ in its structure ranging from 0.5 to 30 wt%, based on the total weight of the polyether carbonate polyol; and
b) equal to or less than 75 wt% of polypropylene carbonate.

Another aspect of the present invention refers to the use of the mixture described above in the preparation of a polyurethane formulation.

A further aspect of the invention refers to a process for the preparation of a polyurethane formulation; said process comprises the reaction of a mixture as defined above with one or more polyisocyanate compounds.

Another aspect of the invention is directed to a polyurethane formulation obtainable by the process as defined above.

Further aspects of the invention refer to the use of the polyurethane formulation as described above in the preparation of CASE (Coatings, Adhesives, Sealants and Elastomers) applications, a thermoplastic polyurethane or a polyurethane foam.

## BRIEF DESCRIPTION OF THE DRAWINGS

Figure 1. Differential scanning calorimeter (DSC) plots of mixtures having 10 wt% of polypropylene carbonate (PPC) and 90 wt% of polyether carbonate polyol, wherein the polyether carbonate polyol has different weight proportions of $CO_2$ in its structure (A) 0 wt%, B) 10 wt% and C) 20 wt%).

Figure 2. Differential scanning calorimeter (DSC) plots of mixtures having 20 wt% of polypropylene carbonate (PPC) and 80 wt% of polyether carbonate polyol, wherein the polyether carbonate polyol has different proportions of $CO_2$ in its structure (A) 0 wt%, B) 10 wt% and C) 20 wt%).

Figure 3. Differential scanning calorimeter (DSC) plots of mixtures having 40 wt% of polypropylene carbonate (PPC) and 60 wt% of polyether carbonate polyol, wherein the polyether carbonate polyol has different proportions of $CO_2$ in its structure (A) 0 wt%, B) 10 wt% and C) 20 wt%).

Figure 4. Thermo gravimetric analysis (TGA) plots of mixtures having 40 wt% of polypropylene carbonate (PPC) and 60 wt% of polyether carbonate polyol, wherein the polyether carbonate polyol has different proportions of $CO_2$ in its structure (B) 0 wt% and C) 10 wt%). PPC TGA curve are plotted as reference (A).

## DETAILED DESCRIPTION OF THE INVENTION

As mentioned before, the first aspect of the present invention relates to a mixture comprising:

a) at least 25 wt% of polyether carbonate polyol having a content of $CO_2$ in its structure ranging from 0.5 to 30 wt%, based on the total weight of the polyether carbonate polyol; and
b) equal to or less than 75 wt% of polypropylene carbonate.

Polyether carbonate polyol

By the term polyether carbonate polyol should be understood a polyether polyol having $CO_2$ groups randomly incorporated in the chemical structure thereof. Particularly, the weight proportion of $CO_2$ in the polyether polyol structure ranges from 0.5 to 30 wt%.

The preparation of polyether carbonate polyols can be made by a process comprising copolymerizing one or more H-functional initiator substances, one or more alkylene oxides and carbon dioxide in the presence of a double metal cyanide catalyst (DMC).

Typically, alkylene oxides having from 2 to 24 carbon atoms can be used. Examples of said alkylene oxides include, among others, one or more compounds selected from the group consisting of optionally substituted ethylene oxide, propylene oxide, butene oxides, pentene oxides, hexene oxides, heptene oxides, octene oxides, nonene oxides, decene oxide, undecene oxides, dodecene oxides, cyclopentene oxide, cyclohexane oxide, cycloheptene oxide, cyclooctene oxide and styrene oxide. Substituted alkylene oxides preferably refer to alkylene oxides substituted with a $C_1$-$C_6$ alkyl group, preferably methyl or ethyl. Preferred alkylene oxides are ethylene oxide, propylene oxide, butene oxide, styrene oxide and mixtures thereof. In a particular embodiment, the alkylene oxide is propylene oxide.

The term "H-functional initiator substance" refers to a compound having H atoms active for the alkoxylation, such as, for example, alcohols, primary or secondary amines, or carboxylic acids. Suitable H-functional initiator substances include one or more compounds selected from the group consisting of mono- or poly-hydric alcohols, polyvalent amines, polyvalent thiols, aminoalcohols, thioalcohols, hydroxy esters, polyether polyols, polyester polyols, polyester ether polyols, polyether carbonate polyols, polycarbonate polyols, polycarbonates, polyethyleneimines, polyether amines, polytetrahydrofurans, polytetrahydrofuranamines, polyether thiols, polyacrylate polyols, castor oil, the mono- or di-glyceride of ricinoleic acid, monoglycerides of fatty acids, chemically modified mono-, di- and/or tri-glycerides of fatty acids, and $C_1$-$C_{24}$-alkyl fatty acid esters that contain on average at least 2 hydroxyl groups per molecule.

In a particular embodiment, the H-functional initiator substance is a polyhydric alcohol also known as polyol, more particularly is a polyether polyol, preferably having a number average molecular weight from 100 to 4,000 Da. More preferably, the polyether polyol has a functionality from 2 to 8, i.e., it has from 2 to 8 hydroxyl groups per molecule, even more preferably is a diol or a triol.

Suitable polyether polyols include poly(oxypropylene) polyols, ethylene oxide-capped poly(oxypropylene) polyols, mixed ethylene oxide-propylene oxide polyols, butylene oxide polymers, butylene oxide copolymers with ethylene oxide and/or propylene oxide, polytetra methylene ether glycols and the like. Most preferred are poly(oxypropylene) polyols, particularly having from two to eight hydroxyl groups, more preferably diols and triols, having number average molecular weights lower than 2,000 Da, more preferably between 200 and 1,000 Da, even more preferably between 300 and 800 Da.

More preferably, the polyether polyol used as the H-functional initiator substance has been synthesized by acidic catalysis, i.e. by polymerizing an epoxide in the presence of active hydrogen-containing initiator and acidic catalysts. Examples of suitable acidic catalysts include Lewis acids such as $BF_3$, $SbF_5$, $Y(CF_3SO_3)_3$, or Bronsted acids such as $CF_3SO_3H$, $HBF_4$, $HPF_6$, $HSbF_6$.

In a particular embodiment, the H-functional initiator substance is a polyether polyol that has been synthesized by acidic catalysis. Preferably, it is a polyether polyol that has been synthesized by acidic catalysis and has a number average molecular weight lower than 2,000 Da, preferably between 200 and 1,000 Da and more preferably between 300 and 800 Da.

The polyether carbonate polyol used in the mixture of the invention has a functionality of at least two, preferably from two to eight, even more preferably a functionality of 2 or 3, i.e. two or three hydroxyl groups per molecule. Thus, the polyether carbonate polyol is preferably a polyether carbonate diol or a polyether carbonate triol, even more preferably is a polyether carbonate triol. This functionality coincides with the functionality of the H-functional starter substance used to prepare it.

In a particular embodiment, the number average molecular weight of the polyether carbonate polyol ranges from 500 to 20,000 Da, preferably from 1,000 to 12,000 Da, more preferably from 1,000 to 5,000 Da.

Preferably, the polyether carbonate polyol (referred to the whole polyether carbonate polyol chain) has from 5 to 25 wt% of carbon dioxide, preferably from 10 to 25 wt%, even more preferably from 10 to 20 wt%, even more preferably from 12 to 20 wt% based on the total weight of the polyether carbonate polyol.

In a preferred embodiment, the polyether carbonate polyol is made by a process comprising copolymerizing one or more H-functional initiator substances, one or more alkylene oxides and carbon dioxide in the presence of a double metal cyanide catalyst, wherein said double metal cyanide catalyst is obtained by a process comprising:

a) synthesizing a solid double metal cyanide catalyst in the presence of an organic complexing agent and a polyether polyol ligand; and
b) first washing the catalyst obtained in step a) with an aqueous solution comprising:

- 90-100 wt% of water; and
- 0-10 wt% of a polyether polyol ligand,
  to form a slurry, wherein the aqueous solution does not contain any organic complexing agent other than the polyether polyol ligand.

In a particular embodiment, said process further comprises:

c) isolating the catalyst from the slurry obtained in step b); and
d) washing the solid catalyst obtained in step c) with a solution comprising:

- 90-100 wt% of an organic complexing agent, and
- 0-10 wt% of a polyether polyol ligand.

Step a)

This step can be performed by any method known in the prior art for the synthesis of a DMC catalyst. In a particular embodiment, this step can be carried out by reacting, in an aqueous solution, a water-soluble metal salt (in excess) and a water-soluble metal cyanide salt in the presence of a polyether polyol ligand and an organic complexing agent.

In a preferred embodiment, aqueous solutions of a water-soluble metal salt and a water-soluble metal cyanide salt are first reacted in the presence of the organic complexing agent using efficient mixing to produce a catalyst slurry. The metal salt is used in excess; preferably the molar ratio of metal salt to metal cyanide salt is between 2:1 and 50:1, more preferably between 10:1 and 40:1. This catalyst slurry contains the reaction product of the metal salt and the metal cyanide salt, which is a double metal cyanide compound. Also present are excess metal salt, water, and organic complexing agent, all of which are incorporated to some extent in the catalyst structure. In another preferred embodiment, the mixture of the aqueous solution containing the water-soluble metal salt and the aqueous solution containing the water-soluble metal cyanide salt takes place at a temperature ranging from 30 to 70°C, more preferably from 40 to 60°C, even more preferably at about 50°C.

The water-soluble metal salt preferably has the general formula $MA_n$ wherein:

M is a cation selected form the group consisting of Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II) and Cr(III). Preferably, M is a cation selected from Zn(II), Fe(II), Ni(II), Mn(II) and Co(II);

A is an anion selected from the group consisting of halide, hydroxide, sulfate, carbonate, vanadate, cyanide, oxalate, thiocyanate, isocyanate, isothiocyanate, carboxylate and nitrate. Preferably, A is a cation selected from halide; and

n is 1, 2 or 3 and satisfies the valency state of M.

Examples of suitable metal salts include, but are not limited to, zinc chloride, zinc bromide, zinc acetate, zinc acetonylacetonate, zinc benzoate, zinc nitrate, iron(II) sulfate, iron(II) bromide, cobalt(II) chloride, cobalt(II) thiocyanate, nickel(II) formate, nickel(II) nitrate and the like and mixtures thereof. In a particular embodiment, the water-soluble metal salt is zinc chloride.

The water-soluble metal cyanide salts preferably have the formula $D_x[E_y(CN)_6]$, wherein:

D is an alkali metal ion or alkaline earth metal ion;

E is a cation selected from the group consisting of Co(II), Co(III), Fe(II), Fe(III), Mn(II), Mn(III), Cr(II), Cr(III), Ni(II), Ir(III), Rh(III), Ru(II), V(IV) and V(V). Preferably, E is selected from Co(II), Fe(II), Ni(II), Co(III) and Fe(III); and

x and y are integers greater than or equal to 1, the sum of the charges of x and y balances the charge of the cyanide (CN) group.

Suitable water-soluble metal cyanide salts include, but are not limited to, potassium hexacyanocobaltate (III), potassium hexacyanoferrate (II), potassium hexacyanoferrate (III), calcium hexacyanocobaltate (III), lithium hexacyanocobaltate (III), and the like. In a particular embodiment, the metal cyanide salt is potassium hexacyanocobaltate (III).

The organic complexing agent can be included with either or both of the aqueous salt solutions, or it can be added to the catalyst slurry immediately following precipitation of the DMC compound. It is generally preferred to pre-mix the organic complexing agent with either aqueous solution before combining the reactants. Usually, an excess amount of the complexing agent is used. Typically, the molar ratio of complexing agent to metal cyanide salt is between 10:1 and 100:1, preferably between 10:1 and 50:1, more preferably between 20:1 and 40:1.

Generally, the complexing agent must be relatively soluble in water. Suitable organic complexing agents are those commonly known in the art, for example in US 5,158,922. Preferred organic complexing agents are water-soluble heteroatom-containing organic compounds that can complex with the double metal cyanide compound. According to the present invention, the organic complexing agent is not a polyether polyol. More preferably, the organic complexing agents are water-soluble heteroatom-containing compounds selected from monoalcohols, aldehydes, ketones, ethers, esters, amides, ureas, nitriles, sulfides and mixtures thereof. Preferred organic complexing agents are water-soluble aliphatic alcohols, preferably $C_1$-$C_6$ aliphatic alcohols, selected from the group consisting of ethanol, isopropyl alcohol, *n*-butyl alcohol, *iso*-butyl alcohol, *sec*-butyl alcohol and tert-butyl alcohol. Tert-butyl alcohol (TBA) is particularly preferred.

Preferably, the aqueous metal salt and metal cyanide salt solutions (or their DMC reaction product) are efficiently mixed with the organic complexing agent. A stirrer can be conveniently used to achieve efficient mixing.

Examples of double metal cyanide compounds resulting from this reaction include, for example, zinc hexacyanocobaltate (III), zinc hexacyanoferrate (III), nickel hexacyanoferrate (II), cobalt hexacyanocobaltate (III) and the like. Zinc hexacyanocobaltate (III) is preferred.

The catalyst slurry produced after the mixing of the aqueous solutions in the presence of the organic complexing agent is then combined with a polyether polyol ligand. This step is preferably performed using a stirrer so that an efficient mixture of the catalyst slurry and the polyether polyol takes place.

This mixture is preferably performed at a temperature ranging from 30 to 70°C, more preferably from 40 to 60°C, even more preferably at about 50°C.

Suitable polyether polyols include those produced by ring-opening polymerization of cyclic ethers, and include epoxide polymers, oxetane polymers, tetrahydrofuran polymers and the like. Any method of catalysis can be used to make the polyethers. The polyethers can have any desired end groups, including, for example, hydroxyl, amine, ester, ether or the like. Preferred polyethers are polyether polyols having average hydroxyl functionalities from about 2 to about 8. Also preferred are polyether polyols having a number average molecular weight lower than 2,000 Da, more preferably between 200 and 1,000 Da, even more preferably between 300 and 800 Da. These are usually made by polymerizing epoxides in the presence of active hydrogen-containing initiators and basic, acidic or organometallic catalysts (including DMC catalysts).

Useful polyether polyols include poly(oxypropylene) polyols, ethylene oxide-capped poly(oxypropylene) polyols, mixed ethylene oxide-propylene oxide polyols, butylene oxide polymers, butylene oxide copolymers with ethylene oxide and/or propylene oxide, polytetra methylene ether glycols and the like. Most preferred are poly(oxypropylene) polyols, particularly diols and triols having number average molecular weights lower than 2,000 Da, more preferably between 200 and 1,000 Da, even more preferably between 300 and 800 Da.

More preferably, the polyether polyol used in the preparation of the DMC catalyst has been synthesized by acidic catalysis, i.e. by polymerizing an epoxide in the presence of active hydrogen-containing initiator and acidic catalysts. Examples of suitable acidic catalysts include Lewis acids such as $BF_3$, $SbF_5$, $Y(CF_3SO_3)_3$, or Bronsted acids such as $CF_3SO_3H$, $HBF_4$, $HPF_6$, $HSbF_6$.

In a particular embodiment, the polyether polyol ligand is a poly(oxypropylene) polyol with a number average molecular weight between 200 and 1,000 Da, preferably between 300 and 800 Da, obtained by basic catalysis.

In another embodiment, the polyether polyol ligand is a poly(oxypropylene) polyol with a number average molecular weight between 200 and 1,000 Da, preferably between 300 and 800 Da, obtained by acidic catalysis.

Using a polyether polyol obtained by acidic catalysis in the preparation of the DMC catalyst is preferred. Once the polyether polyol has been combined with the double metal cyanide compound, a polyether polyol-containing solid catalyst is isolated from the catalyst slurry. This is accomplished by any convenient means, such as filtration, centrifugation or the like.

In a particular embodiment, enough reactants are used to give a solid DMC catalyst that contains:

- 30-80 wt% of the double metal cyanide compound;
- 1-10 wt% of water;
- 1-30 wt% of the organic complexing agent; and
- 1-30 wt% of the polyether polyol ligand.

Preferably, the total amount of the organic complexing agent and the polyether polyol is from 5 to 60 wt% with respect to the total weight of the catalyst, more preferably from 10 to 50 wt%, even more preferably from 15 to 40 wt%.

Step b)

The isolated polyether polyol-containing solid catalyst is then first washed with an aqueous solution comprising 90-100 wt% of water and 0-10 wt% of a polyether polyol. This aqueous solution is absent of any organic complexing agent as those mentioned above. No other washing step is performed before this first washing step once the isolated solid DMC catalyst has been obtained in step a).

The polyether polyol used in step b) is as defined above for step a).

Percentages by weight of the components in the aqueous solution are based on the total weight of said aqueous solution.

It has been found that the particular composition of the aqueous solution used in this washing step leads to a double metal cyanide catalyst that provides an improved process for preparing polyether carbonate polyols.

Preferably, the amount of polyether polyol ligand in the aqueous solution in step b) is lower than 5 wt% with respect to the total weight of the aqueous solution. According to a further particular embodiment the amount of polyether polyol ligand in the aqueous solution in step b) is lower than 4 wt% with respect to the total weight of solution, preferably lower than 3 wt%. According to a further embodiment, the amount of polyether polyol ligand in the aqueous solution in step b) is between 0.05 and 10 wt% with respect to the total weight of solution, preferably between 0.1 and 2 wt%, more preferably between 0.3 and 1.8 wt%. In a further particular embodiment, the amount of polyether polyol ligand in the aqueous solution in step b) is 0 wt%.

In step b) the water and the polyether polyol ligand can be brought into contact with the catalyst obtained in step a) simultaneously or consecutively. That is, the aqueous solution in step b) can already contain both the water and the polyether polyol ligand when brought into contact with the catalyst obtained in step a) ("simultaneous bringing into contact") or the catalyst obtained in step a) can be first brought into contact with one of the individual components (the water or the polyether polyol ligand) and the resulting mixture then brought into contact with the other individual component ("consecutive bringing into contact"). In a particular embodiment, the water and the polyether polyol ligand are brought into contact with the catalyst obtained in step a) consecutively.

In a preferred embodiment, the catalyst obtained in step a) is first brought into contact with water and then brought into contact with the polyether polyol ligand which is preferably in a 0.1 to 5 wt%, more preferably in 0.1 to 3 wt%, with respect to the total weight of the aqueous solution.

This washing step is generally accomplished by reslurrying the catalyst in the aqueous solution followed by a catalyst isolation step using any convenient means, such as filtration.

It has also been particularly advantageous to use this aqueous solution in the washing step b) in combination with an excess amount of the organic complexing agent in step a) and/or d).

Step d)

Although a single washing step suffices, it is preferred to wash the catalyst more than once. In a preferred embodiment, the subsequent wash is non-aqueous and includes the reslurry of the double metal cyanide catalyst in an organic complexing agent or in a mixture of the organic complexing agent and the polyether polyol used in the previous washing step. More preferably, the double metal cyanide catalyst is washed with a solution comprising 90-100 wt% of the organic complexing agent and 0-10 wt% of the polyether polyol.

The polyether polyol used in step d) is as defined above for step a).

Percentages by weight of the components in the solution are based on the total weight of said solution.

Preferably, the amount of polyether polyol in the solution in step d) is lower than 5 wt% with respect to the total weight of solution. According to a further particular embodiment the amount of polyether polyol ligand is lower than 4 wt% with respect to the total weight of solution, preferably lower than 3 wt%. According to a further embodiment, the amount of polyether polyol in step d) is between 0.05 and 5 wt% with respect to the total weight of solution, preferably between 0.1 and 2 wt%, more preferably between 0.3 and 1.8 wt%.

The organic complexing agent is preferably *tert*-butyl alcohol. The polyether polyol is preferably a poly(oxypropylene)polyol, more preferably a poly(oxypropylene)polyol having a number average molecular weight lower than 2,000 Da, more preferably from 200 to 1,000 Da or from 300 to 800 Da. In a particular embodiment, the polyether polyol has been synthesized by acidic catalysis.

Typically, the molar ratio of complexing agent to metal cyanide salt is between 10:1 and 200:1, preferably between 20:1 and 150:1, more preferably between 50:1 and 150:1.

In step d) the organic complexing agent and the polyether polyol can be brought into contact with the solid catalyst obtained in step c) simultaneously or consecutively. In a particular embodiment, they are brought into contact with the solid catalyst obtained in step c) consecutively. Preferably, the catalyst obtained in step c) is first brought into contact with the organic complexing agent and then brought into contact with the polyether polyol.

After the catalyst has been washed, it is usually preferred to dry it under vacuum until the catalyst reaches a

constant weight. The catalyst can be dried at temperatures within the range of about 50°C to 120°C, more preferably from 60°C to 110°C, even more preferably from 90°C to 110°C. The dry catalyst can be crushed to yield a highly active catalyst in powder form appropriate for use in the co-polymerization process of the invention.

In a particular embodiment, the double metal cyanide compound is zinc hexacyanocobaltate (III), the organic complexing agent is tert-butyl alcohol and the polyether polyol is a poly(oxypropylene) polyol. Preferably the polyether polyol is a poly(oxypropylene)polyol, more preferably a poly(oxypropylene)polyol having a number average molecular weight lower than 2,000 Da, more preferably from 200 to 1,000 Da or from 300 to 800 Da. In a particular embodiment, the polyether polyol has been synthesized by acidic catalysis.

In a particular embodiment, the catalyst obtainable by the above process is also characterized by comprising:

- at least one double metal cyanide compound;
- at least one organic complexing agent; and
- at least one polyether polyol ligand having a number average molecular weight lower than 2,000 Da.

In a particular embodiment, the double metal cyanide compound is zinc hexacyanocobaltate (III), the organic complexing agent is tert-butyl alcohol and the polyether polyol has a number average molecular weight lower than 2,000 Da. Most preferred the polyether polyol is a poly(oxypropylene) polyol, particularly a diol or triol having number average molecular weight between 200 and 1,000 Da, more preferably between 300 and 800 Da.

In a particular embodiment, the organic complexing agent is tert-butyl alcohol and the polyether polyol has been synthesized by acidic catalysis. Preferably, the organic complexing agent is tert-butyl alcohol and the polyether polyol has a number average molecular weight lower than 2,000 Da, preferably between 200 and 1,000 Da, more preferably between 300 and 800 Da, and has been synthesized by acidic catalysis.

In another embodiment, the organic complexing agent is tert-butyl alcohol and the polyether polyol has been synthesized by basic catalysis. Preferably, the organic complexing agent is tert-butyl alcohol and the polyether polyol has a number average molecular weight lower than 2,000 Da, preferably between 200 and 1,000 Da, more preferably between 300 and 800 Da, and has been synthesized by basic catalysis.

In a particular embodiment, the double metal cyanide catalyst obtainable by the above process comprises:

- 30-80 wt% of the double metal cyanide compound;
- 1-10 wt% of water;
- 1-30 wt% of the organic complexing agent; and
- 1-30 wt% of the polyether polyol ligand.

Preferably, the total amount of the organic complexing agent and the polyether polyol is from 5 to 60 wt% with respect to the total weight of the catalyst, more preferably from 10 to 50 wt%, even more preferably from 15 to 40 wt%.

<u>Polypropylene carbonate</u>

The polypropylene carbonate, also referred to as PPC, comprised in the mixture of the invention is the resulting product of copolymerizing $CO_2$ with propylene oxide in the presence of a catalyst. Said reaction provides a compound containing a primary repeating unit having the following structure:

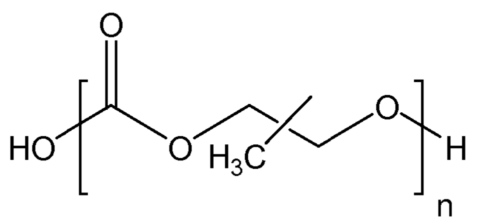

wherein n is an integer ranging from 5 to 150.

Thus, in a preferred embodiment, all terminal groups of the polymer are hydroxyl groups.

However, in some embodiments, other terminal groups instead of hydroxyl groups can be present such as a moiety corresponding to the bound formed of any nucleophile that can ring-open an epoxide. Thus, in another preferred embodiment, more than 85% of the terminal groups are hydroxyl groups.

In a particular embodiment, n is an integer which ranges from 10 to 150, even more preferably from 10 to 100.

In a particular embodiment, said polypropylene carbonate is obtained by copolymerization of $CO_2$ and propylene oxide in the presence of transition metal catalysts, such as metal Salen catalysts, for example cobalt Salen catalysts or

zinc glutarate catalysts. Suitable catalysts and methods include those mentioned, for example, in WO2010/022388, WO2010/028362, WO2012/071505, US 8,507,708, US 4,789,727, Angew. Chem. Int., 2003, 42, 5484-5487; Angew. Chem. Int., 2004, 43, 6618-6639; and Macromolecules, 2010, 43, 7398-7401.

The location of the pending methyl group depends on the regiochemistry of adjacent repeating units in the polymer chain. There are three regiochemistry possibilities which are depicted below:

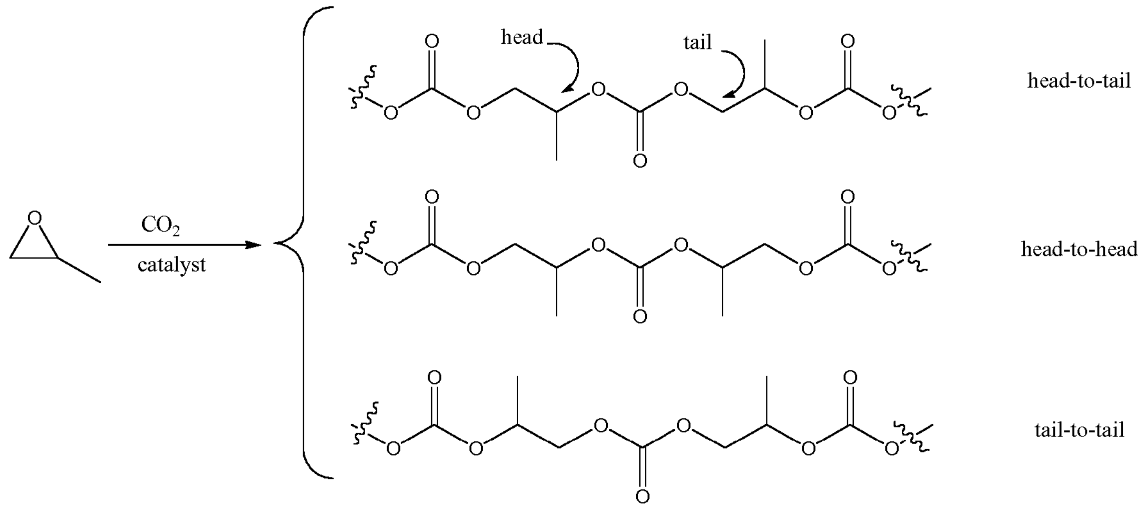


While a specific regiochemical orientation of monomer units may be shown in the representations of polymer structures herein, this is not intended to limit the polymer structures to the regiochemical arrangement shown but it is to be interpreted to encompass all regiochemical arrangements included that depicted, the opposite regiochemistry, random mixtures, isotactic materials, syndiotactic materials, racemic materials, and/or enantioenriched materials and combinations of any of these.

In a preferred embodiment, the polypropylene carbonate used in the mixture of the invention has on average more than about 80% of adjacent monomer units oriented head-to-tail, more preferably more than 85% of adjacent monomer units are oriented head-to-tail, even more preferably more than 95% of adjacent monomer units are oriented head-to-tail. In a particular embodiment, essentially all adjacent monomer units in the polypropylene carbonate are oriented head-to-tail.

In another particular embodiment, the polypropylene carbonate is characterized for having a high percentage of carbonate linkages. Preferably, the polypropylene carbonate has on average more than about 80% of adjacent monomer units connected via carbonate linkages and less than about 20% ether linkages. More preferably, the polypropylene carbonate has on average more than about 90% of adjacent monomer units connected via carbonate linkages. Even more preferably, the polypropylene carbonate has on average more than about 95% of adjacent monomer units connected via carbonate linkages, even much more preferably more than 97%. In a particular embodiment, the polypropylene carbonate has on average all its adjacent monomer units connected via carbonate linkages.

In another particular embodiment, the polypropylene carbonate has a PDI less than about 2, preferably less than about 1.8, more preferably less than 1.5, even more preferably less than 1.2. In certain embodiment, the polypropylene carbonate has a PDI between about 1.0 and 1.2.

In another particular embodiment, the polypropylene carbonate is characterized for having a low cyclic carbonate content. Preferably, the polypropylene carbonate has a cyclic carbonate content less than about 5 wt%, more preferably less than 3 wt%, even more preferably less than 2 wt%. In certain embodiment, the polypropylene carbonate contains essentially no cyclic carbonate.

In another particular embodiment, the polypropylene carbonate has a number average molecular weight lower than 15,000 Da, preferably from 500 to 10,000 Da, more preferably from 700 to 5,000 Da, provided that the weight average molecular weight is lower than 17,000 Da. In an even preferred embodiment, the polypropylene carbonate has a number average molecular weight between about 1,000 and about 3,500 Da.

In another preferred embodiment, all terminal groups of the polypropylene carbonate are hydroxyl groups. Thus, the polypropylene carbonate used in the mixture of the invention is a diol.

In another particular embodiment, the polypropylene carbonate is comprised in the mixture of the invention in a weight proportion between 5 and 45 wt%, more preferably from 20 to 45 wt% with respect to the total weight of the mixture.

In a particular embodiment, the mixture of the invention comprises:

a) at least 50 wt% of polyether carbonate polyol having a content of $CO_2$ in its structure ranging from 5 to 25 wt%, based on the total weight of the polyether carbonate polyol; and

b) equal to or less than 50 wt% of polypropylene carbonate.

A second aspect of the invention refers to a process for the preparation of a mixture comprising a polypropylene carbonate as defined above and a polyether carbonate polyol as also defined above.

Said process comprises the physical mixture of both components in the predetermined proportions during the time necessary to obtain a homogeneous mixture. Typically, the mixture comprising both components is prepared in a speed mixer, preferably at 3,500 rpm for at least 3 minutes.

In a particular embodiment, the polypropylene carbonate is added to the mixture in a weight proportion between 5 and 45 wt%, more preferably from 20 to 45 wt% with respect to the total weight of the mixture.

The components of the mixture of the invention exhibit an improved miscibility and thermal stability when they are compared to a mixture comprising a polypropylene carbonate and a polyether polyol, said polyether polyol having no $CO_2$ content. Particularly, and as pointed out in the experimental part of this document, it has been observed that in spite of the different chemical structure and mobility of the polymer chains of both components, the mixture exhibits one Tg (also referred in the present document to as $Tg_1$' to differentiate from the Tg of the components alone) which is found to be between the corresponding Tg of the pure components and close to the theoretical value. This data gives an indication of the good miscibility of both components as this behavior typically constitutes an excellent miscibility standard between amorphous polymers *[*Bull. Am. Phys. Soc., 1956, 1, 123].

Only when the polyether carbonate polyol has up to 10 wt% of $CO_2$ and the mixture contains a high proportion of polypropylene carbonate, two Tgs are observed (also referred in the present document to as $Tg_1$' and $Tg_2$') but they are shifted with respect to the Tgs of the components alone and the miscibility is always increased with respect to a mixture comprising a polypropylene carbonate and a polyether polyol with no content of $CO_2$.

In a particular embodiment, the $Tg_1$' of the mixture of the invention ranges from -25°C to -62°C, more preferably from -25°C to -60°C, even more preferably from -25°C to - 55°C. This temperature depends mainly on the content of both components, as well as the content of $CO_2$ in the polyether carbonate polyol. The higher the weight proportion of the polypropylene carbonate, the higher the Tg of the mixture. Furthermore, the higher the proportion of $CO_2$ in the polyether carbonate polyol, the higher the Tg of the mixture.

In the particular case of mixtures providing two Tgs shifted with respect to the Tgs value of the components alone, one of the Tgs (also referred in the present document to as $Tg_1$') ranges from -40°C to -60°C, more preferably from -50°C to -55°C.

In view of the miscibility of the mixture of the invention, it can be processed by reaction with di- and/or polyisocyanates to give polyurethanes for different technical applications, such as for preparing foams, adhesives, coatings, thermoplastic polyurethanes and the like.

Moreover, the incorporation of the polyether carbonate polyol to polypropylene carbonate improves the thermal stability of polypropylene carbonate which has a degradation temperature relatively low. Surprisingly, this improved stability is remarkably higher when compared to the case in which polyether polyol without any content of $CO_2$ is incorporated in the polypropylene carbonate.

Additionally, the total content of $CO_2$ in the mixture is increased with the subsequent improvement in its sustainability.

Thus, a further aspect of the present invention refers to a process for the preparation of a polyurethane formulation, said process comprises the reaction of a mixture as defined above with one or more polyisocyanate compounds.

Said isocyanates react with the reactive end groups of the components of the mixture to render higher molecular weight structures through chain extension and/or cross-linking. The resulting polymer comprises a plurality of segments derived from the polyether carbonate polyols and the polypropylene carbonate linked via urethane bonds.

In a particular embodiment, the polyurethane is obtained by reacting a mixture as defined herein above with a stoichiometric excess of one or more di-isocyanates. As will be appreciated by those skilled in the art, the degree of polymerization can be modified by controlling the relative amount of isocyanate as well as the order of reagent addition and the reaction conditions.

A large number of isocyanates are known in the art which can be used in the process for obtaining the polyurethane. However, in a particular embodiment, the isocyanate used to prepare said polyurethane comprises two or more isocyanate groups per molecule.

In a particular embodiment, the isocyanate is a di-isocyanate. In another particular embodiment, the isocyanate is a higher polyisocyanate, such as a tri-isocyanate, a tetraisocyanate, an isocyanate polymer or oligomer, and the like, which are typically a minority component of a mix of predominantly diisocyanates.

In a particular embodiment, the isocyanate is an aliphatic or cycloaliphatic polyisocyanate or a derivative thereof or an oligomer of an aliphatic or cycloaliphatic polyisocyanate. In another particular embodiment, the isocyanate is an aromatic polyisocyanate or a derivative thereof or an oligomer of an aromatic polyisocyanate. In another particular

embodiment, the isocyanate may comprise mixtures of any two or more of the above type of isocyanates.

Suitable aliphatic and cycloaliphatic isocyanate compounds include, for example, 1,3-trimethylene diisocyanate; 1,4-tetramethylene diisocyanate; 1,6-hexamethylene diisocyanate; 2,2,4-trimethylhexamethylene disocyanate; 2,4,4-trimethylhexamethylene disocyanate; 1,9-nonamethylene diisocyanate; 1,10-decamethylene diisocyanate; 1,4-cyclohexane diisocyanate; isophorone diisocyanate; 4,4'-dicyclohexylmethane diisocyanate; 2,2'-diethylether diisocyanate; hydrogenated xylylene diisocyanate, and hexamethylene diisocyanate-biuret.

The aromatic isocyanate compounds include, for example, *p*-phenylene diisocyanate; tolylene diisocyanate; xylylene diisocyanate; 4,4'-diphenyl diisocyanate; 2,4'-diphenylmethane diisocyanate; 1,5-naphthalene diisocyanate; 4,4'-diphenylmethane diisocyanate (MDI); 3,3'-methyleneditolylene-4,4'-diisocyanate; tolylenediisocyanate-trimethylolpropane adduct; triphenylmethane triisocyanate; 4,4'-diphenylether diisocyanate; tetrachlorophenylene diisocyanate; 3,3'-dichloro-4,4'-diphenylmethane diisocyanate; and triisocyanate phenylthiophosphate.

In a particular embodiment, the isocyanate is selected from the group consisting of 1,6-hexamethylaminediisocyanate (HDI); isophore diisocyanate (IPDI); 4,4-methylene bis(cyclohexyl isocyanate) ($H_{12}$MDI); 2,4-toluene diisocyanate (TDI); 2,6-toluene diisocyanate (TDI); 4,4'-diphenylmethane diisocyaante (MDI); 2,4'-diphenylmethane diisocyaante (MDI); xylylene diisocyanate (XDI); 1,3-bis(isocyanmethyl)cyclohexane (H6-XDI); 2,2,4-trimethylhexamethylene diisocyaante; 2,4,4-trimethylhexamethylene diisocyaante (TMDI); m-tetramethylxylylene diisocyanate (TMXDI); *p*-tetramethylxylylene diisocyanate (TMXDI); isocyanatomethyl-1,8-octane diisocyanate (TIN); 4,4',4"-triphenylmethane triisocyanate; tris(*p*-isocyanatomethyl)thiosulfate; 1,3-bis(isocyanatomethyl)benzene; 1,4-tetramethylene diisocyanate; trimethylhexane diisocyanate; 1,6-hexamethylene diisocyanate; 1,4-cyclohexyl diisocyanate; lysine diisocyanate; HDI allophonate trimer; HDI-trimer and mixtures of any two or more thereof.

In a preferred embodiment, the isocyanate used to prepare the polyurethane is 2,4-toluene diisocyanate (TDI) or 2,6-toluene diisocyanate (TDI).

Isocyanates suitable for obtaining the polyurethane can be synthesized according to procedures already known for a skilled in the art. However, they are also available commercially under different trade names in various grades and formulations. The selection of suitable commercially-available isocyanates as reagent to produce polyurethane is within the capability of one skilled in the art of polyurethanes technology.

In a particular embodiment of the invention, the process for obtaining the polyurethane further comprises the addition of a catalyst to the reaction mixture. Conventional catalysts comprising an amine compound or tin compound may be used to promote the polymerization reaction between the mixture of the invention and the isocyanate.

Any suitable urethane catalyst may be used, including tertiary amine compounds and organometallic compounds. Examples of tertiary amine compounds include triethylene diamine, N-methylmorpholine, N,N-dimethylcyclohexyl amine, pentamethyldiethylene triamine, tetramethylehtylene diamine, 1-methyl-4-dimethylaminoethylpiperazine, 3-methoxy-N-dimethylpropylamine, N-ethylmorpholine, diethylethanolamine, N,N-dimethyl-N,N'-dimethyl isopropylpropylene diamine, N,N-diethyl-3-diethylaminopropylamine, dimethylbenzylamine, DABCO, pentamethyldipropylenetriamine, bis(dimethylamino ethyl ether), dimethylcyclohexyl amine, DMT-30, triazabicyclodecene (TBD), N-methyl TBD, ammonium salts and combinations thereof. Examples of organometallic catalysts include organomercury, organolead, organoferric and organotin catalysts.

Suitable tin catalysts include stannous chloride; tin salts of carboxylic acids, such as dibutyltin dilaurate; dibutylbis(laurylthio) stannate, dibutyltinbis(isooctylmercapto acetate) and dibutyltinbis(isooctylmaleate) and tin octanoate.

Typical amounts of catalysts are 0.001 to 10 parts of catalyst per 100 parts by weight of total polyol in the mixture.

In addition to the polyurethane components mentioned above, customary auxiliaries and/or additives can also be added. Such additives may include, but are not limited to, plasticizers, lubricants, stabilizers, colorants, flame retardants, inorganic and/or organic fillers and reinforcing agents.

Plasticizers may be used to modify the rheological properties to a desired consistency. Such plasticizers should be free of water, inert to isocyanate groups and compatible with a polymer. Suitable plasticizers are well known to those skilled in the art and include, but are not limited to, alkyl phthalates such as dioctylphthalate or dibutyl phthalate, partially hydrogenated terpene, trioctyl phosphate, epoxy plasticizers, toluene-sulfamide, chloroparaffins, adipic acid esters, castor oil, toluene and alkyl naphthalenes. The plasticizer is added to the composition in a sufficient amount to provide the desired rheological properties and to disperse any catalyst that may be present in the system.

As lubricants, non-reactive liquids can be used to soften the polyurethane or to reduce its viscosity for improved processing. Examples of lubricants include fatty acid esters and/or fatty acid amides.

Stabilizers may include oxidation stabilizers, hydrolysis stabilizers and/or UV stabilizers. Examples of hydrolysis stabilizers include oligomeric and/or polymeric aliphatic or aromatic carbodiimides. As UV stabilizers, hydroxybenzotriazoles, zinc dibutyl thiocarbamate, 2,6-ditertiary butylcatechol, hydroxybenzophenones, hindered amines and phosphites can be used to improve the light stability of polyurethanes. Color pigments have also been used for this purpose.

The polyurethane composition of the invention may further comprise one or more suitable colorants. Typical inorganic coloring agents include, but are not limited to, titanium dioxide, iron oxides and chromium oxides. Organic pigments may include azo/diazo dyes, phthalocyanines and dioxazines as well as carbon black.

The polyurethane composition of the invention may further comprise one or more suitable flame retardants to reduce flammability. The choice of flame retardant for any specific polyurethane composition often depends on the intended service application of that polyurethane and the attendant flammability testing scenario governing that application. Examples of such flame retardants include chlorinated phosphate esters, chlorinated paraffins and melamine powders.

Optional additives of the polyurethane composition of the invention include fillers. Such fillers are well known to those skilled in the art and include, but are not limited to, carbon black, titanium dioxide, calcium carbonate, surface treated silicas, titanium oxide, fume silica, talc, aluminium trihydrate and the like. In certain embodiment, a reinforcing filler is used in sufficient amount to increase the strength of the composition and/or to provide thixotropic properties to the composition.

Other optional additive to be used in the composition of the invention includes clays. Suitable clays include, but are not limited to, kaolin, surface treated kaolin, calcined kaolin, aluminum silicates and surface treated anhydrous aluminum silicates. The clays can be used in any form. Preferably, the clay is in the form of pulverized powder, spraydried beads or finely ground particles.

The amount of the additives described above will vary depending on the desired application.

The polyurethane obtained according to the process mentioned above may have hydroxyl or isocyanate terminal groups. Thus, the polyurethane thus obtained can be further polymerized linearly or in a three-dimensional network structure by reacting with a compound having at least two hydrogen atoms reactive to isocyanate groups per molecule, or a compound having two isocyanate groups per molecule. Also, by reacting with a compound having a urethane bond and/or urea bond or a compound having at least three hydrogen atoms reactive to the isocyanate groups, the polyurethane can be modified with a cross-linking structure introduced therein.

Another aspect of the invention is directed to a polyurethane formulation obtainable by the process as defined above.

The polyurethane formulation as described above can be used for the preparation of an adhesive formulation, a thermoplastic polyurethane and a polyurethane foam, among many other possible applications.

The following examples merely illustrate the invention. Those skilled in the art will recognize many variations that can be performed without altering the functioning of the invention.

## Examples

### Example 1. Preparation of mixtures

The polypropylene carbonate (PPC) used to prepare the different mixtures had the following properties:

Mn: 1,000 Da
Tg: 6.6°C
$CO_2$ content: 37.6 wt% based on the total weight of the PPC.

It can be prepared according to any of the procedures described in Angew. Chem. Int., 2003, 42, 5484-5487; Angew. Chem. Int., 2004, 43, 6618-6639; Macromolecules, 2010, 43, 7398-7401.

Said polypropylene carbonate was mixed with polyether carbonate polyols having different $CO_2$ content (0 wt%, 10 wt% and 20 wt%) and taking different proportions thereof.

The polyether carbonate polyol can be obtained according to the procedures described, for example, in patent applications WO2012/156431 and WO2015/022290.

### Mixing Procedure

The polyether carbonate polyol and the polypropylene carbonate were mixed in the proportions indicated in Table I below. Before they were mixed, each component was heated in oven at 80°C for 30 minutes. Then, they were mixed in a Dual Asymmetric Centrifugal Mixer System during the required time to obtain a homogeneous mixture, typically at 3,500 rpm for 3 minutes.

Once obtained, the mixtures were characterized by their Tg, number-averaged molecular weight and viscosity.

Glass transition temperature (Tg) was determined by differential scanning calorimeter (DSC). Non-isothermal (10 °C/min from -85 to 200 °C) experiments were carried out using a DSC TA Instruments Q2000 under nitrogen flow, operating with an intra-cooler under nitrogen flow. Temperature and heat flow calibrations were performed with indium as standard. The glass transition temperature was taken from the second heating.

The theoretical Tg was determined following the Fox equation which applies to totally miscible sytems:

$$\frac{1}{Tg} = \frac{w1}{Tg1} + \frac{w2}{Tg2}$$

wherein w1 and w2 are the weight proportions of both components in the mixture and $Tg_1$ and $Tg_2$ correspond to the glass transition temperature of both components taken independently.

Number-averaged molecular weights (Mn) and polydispersity indices (Mw/Mn) were determined against PEG standards by gel-permeation chromatography (GPC) using a Bruker 3800 equipped with a deflection RI detector. Tetrahydrofuran at 1 mL/min flow rate was used as eluent at room temperature.

A Mettler TGA instrument was used for the thermogravimetric measurements. Non-isothermal experiments were performed in the temperature range 30-700 °C, at heating rate of 5 °C/min in nitrogen atmosphere. TGA value is taken from the first maximum of the derivative thermogravimetric curves (DTG).

Brookfield viscosity was determined at 25 °C using a Brookfield DV-III ULTRA Rheometer.

The amount by weight (in wt%) of $CO_2$ incorporated in the resulting polyether carbonate polyol, and the ratio of propylene carbonate to polyether carbonate polyol, were determined by means of $^1$H-NMR (Bruker AV III HD 500, 500 MHz, pulse program zg30, waiting time d1: Is, 120 scans). The sample was dissolved in deuterated chloroform. The relevant resonances in the $^1$H-NMR (based on TMS=0 ppm) are as follows: Cyclic carbonate= 1.50 ppm (3H); Polyether carbonate polyol= 1.35-1.25 ppm (3H); Polyether polyol: 1.25-1.05 ppm (3H).

The amount by weight (in wt. %) of polymer bonded carbonate (CP) in the polyether carbonate polyol was calculated according to formula (I):

$$CP = F(1.35\text{-}1.25) \times 102 \times 100 / Np \qquad \text{(I)}$$

wherein:

- F(1.35-1.25) is the resonance area at 1.35-1.25 ppm for polyether carbonate polyol (corresponds to 3 H atoms);
- the value for Np ("denominator" Np) was calculated according to formula (II):

$$Np = F(1.35\text{-}1.25) \times 102 + F(1.25\text{-}1.05) \times 58 \qquad \text{(II)}$$

- being F(1.25-1.05) the resonance area at 1.25-1.05 ppm for polyether polyol (corresponds to 3 H atoms).

The factor 102 results from the sum of the molar masses of $CO_2$ (molar mass 44 g/mol) and of propylene oxide (molar mass 58 g/mol) and the factor 58 results from the molar mass of propylene oxide.

The amount by weight (in wt. %) of $CO_2$ in polymer was calculated according to formula (III)

$$\%\ CO_2 \text{ in polymer} = CP \times 44 / 102 \qquad \text{(III).}$$

The amount by weight (wt. %) of cyclic carbonate (CC') in the reaction mixture was calculated according to formula (IV) :

$$CC' = F(1.50) \times 102 \times 100 / N \qquad \text{(IV)}$$

wherein:

- F(1.50) is the resonance area at 1.50 ppm for cyclic carbonate (corresponds to 3 H atoms);
- the value for N "denominator" N) was calculated according to formula (V)

$$N = F(1.35\text{-}1.25) \times 102 + F(1.50) \times 102 + F(1.25\text{-}1.05) \times 58 \qquad \text{(V)}$$

The formula (III) was also used to calculate the amount by weight (in wt%) of $CO_2$ in the polypropylene carbonate (PPC).

Table I below shows the experimental data relating to viscosity and glass transition temperature of the prepared mixtures, as well as the theoretical estimation of the Tg of each mixture according to the Fox equation explained above.

| Polyol Mixture | PPC content (wt%) | Mixture $CO_2$ content (wt%) | Viscosity of the mixture 25 °C (cps) | $Tg_1$' (°C) (mixture) | $Tg_2$' (°C) (mixture) | Theoretical Tg (°C) | Theoretical Tg-$Tg_1$' |
|---|---|---|---|---|---|---|---|
| **Polyol (0% $CO_2$)** | 0 | 0.0 | 665 | -63.8 | | | |
| Mixture 1 | 10 | 3.9 | 1,040 | -62.7 | 11.4 | -58.4 | 4.4 |
| Mixture 2 | 20 | 7.5 | 804 | -62.6 | 9.2 | -52.7 | 10.0 |
| Mixture 3 | 40 | 15.0 | - | -62.5 | 0.2 | -40.3 | 22.2 |
| **Polyol (10% $CO_2$)** | 0 | 10.0 | 2,227 | -55.0 | | | |
| Mixture 4 | 10 | 12.9 | 2,581 | -54.4 | | -50.1 | 4.4 |
| Mixture 5 | 20 | 15.6 | 3,581 | -52.5 | | -44.9 | 7.5 |
| Mixture 6 | 40 | 21.1 | 6,762 | -51.0 | -10.4 | -33.9 | 17.0 |
| **Polyol (20% $CO_2$)** | 0 | 19.3 | 51,457 | -41.1 | | | |
| Mixture 7 | 10 | 21.1 | 126,288 | -40.3 | | -37.0 | 3.3 |
| Mixture 8 | 20 | 23.1 | 141,146 | -36.7 | | -32.8 | 3.9 |
| Mixture 9 | 40 | 26.6 | 397,006 | -28.2 | | -24.0 | 4.2 |

Figures 1 depicts the differential scanning calorimeter plots showing the Tg corresponding to the mixtures having 10 wt% PPC and 90 wt% of polyether carbonate polyol, wherein the polyether carbonate polyol has different proportions of $CO_2$ in its structure (A) 0 wt%, B) 10 wt% and C) 20 wt%).

Figures 2 depicts the differential scanning calorimeter plots showing the Tg corresponding to the mixtures having 20 wt% PPC and 80 wt% of polyether carbonate polyol, wherein the polyether carbonate polyol has different proportions of $CO_2$ in its structure (A) 0 wt%, B) 10 wt% and C) 20 wt%).

Figures 3 depicts the differential scanning calorimeter plots showing the Tg corresponding to the mixtures having 40 wt% PPC and 60 wt% of polyether carbonate polyol, wherein the polyether carbonate polyol has different proportions of $CO_2$ in its structure (A) 0 wt%, B) 10 wt% and C) 20 wt%).

The glass transition temperature is particularly sensible to minor local modifications and, particularly, those produced by the intimate mixture of segments of polymer chains with different chemical structure and mobility. Thus, if a mixture provides two Tgs in the same position as the independent components, then the system is considered as completely immiscible. If a mixture provides two Tgs in positions different to those corresponding to the independent components, then the system is considered as partially miscible. However, if only one Tg is observed in a position in compliance with the concentration and Tg of the two components, then the system is considered as miscible *[*Bull. Am. Phys. Soc., 1956, 1, 123].

As can be observed from all these figures and the data provided in Table I, the different mixtures of polypropylene carbonate and polyether carbonate polyol show only one Tg (also referred to as $Tg_1$'), except mixture 6. Furthermore, the $Tg_1$' value is close to the theoretical value, even more when compared to the results of a mixture containing a polyether polyol with no content of $CO_2$, pointing out the good miscibility of both components constituting the mixture.

In addition, the mixture comprising polyether carbonate polyol with 10 wt% of $CO_2$ and 40 wt% of PPC (mixture 6) also shows an enhanced miscibility when compared to a mixture containing a polyether polyol with no content of $CO_2$. It should be pointed out that when two Tgs are observed which are shifted with respect to the Tg of the two components alone, it is also an indicative of the enhanced miscibility. The higher the shift of the Tg, the higher the miscibility.

It is also observed that the higher the content of $CO_2$ in the polyether carbonate polyol, the better the miscibility of both components.

Figures 4 shows the TGA (Thermo gravimetric analysis) plots of mixtures having 40 wt% PPC and 60 wt% of polyether carbonate polyol, wherein the polyether carbonate polyol has different proportions of $CO_2$ in its structure (B) 0 wt% and C) 10 wt%). PPC TGA curve are also plotted as reference (A). As shown in this figure, PPC has a relatively low thermal stability (step maximum at around 155 °C). However, when miscibility between the two components of the mixture is increased, thermal stability mixture is also increased.

As mentioned before, the incorporation of the polyether carbonate polyol to polypropylene carbonate improves the thermal stability of polypropylene carbonate which has a degradation temperature relatively low. Surprisingly, this improved stability is remarkably higher when compared to the case in which polyether polyol without any content of $CO_2$ is incorporated in the polypropylene carbonate.

Additionally, the total content of $CO_2$ in the mixture is increased with the subsequent improvement in its sustainability.

## Claims

1. A mixture comprising:

    a) polyether carbonate polyol having a content of $CO_2$ in its chemical structure ranging from 0.5 to 30 wt%, based on the total weight of the polyether carbonate polyol; and
    b) polypropylene carbonate;

    wherein said mixture comprises:

    a) at least 25 wt% of the polyether carbonate polyol having a content of $CO_2$ in its chemical structure ranging from 0.5 to 30 wt%, based on the total weight of the polyether carbonate polyol; and
    b) equal or less than 75 wt% of the polypropylene carbonate.

2. The mixture according to claim 1 comprising:

    a) at least 50 wt% of polyether carbonate polyol having a content of $CO_2$ in its chemical structure ranging from 5 to 25 wt%, based on the total weight of the polyether carbonate polyol; and
    b) equal or less than 50 wt% of polypropylene carbonate.

3. The mixture according to any of claims 1 and 2, wherein the polyether carbonate polyol has from 5 to 25 wt% of carbon dioxide, based on the total weight of the polyether carbonate polyol.

4. The mixture according to any one of claims 1 to 3, wherein the polyether carbonate polyol is obtainable by a process comprising copolymerizing one or more H-functional initiator substances, one or more alkylene oxides and carbon dioxide in the presence of a double metal cyanide catalyst, wherein said double metal cyanide catalyst is obtained by a process comprising:

    a) synthesizing a solid double metal cyanide catalyst in the presence of an organic complexing agent and a polyether polyol ligand; and
    b) first washing the catalyst obtained in step a) with an aqueous solution comprising:

        - 90-100 wt% of water; and
        - 0-10 wt% of a polyether polyol ligand,
        to form a slurry, wherein the aqueous solution does not contain any organic complexing agent other than the polyether polyol ligand.

5. The mixture according to any one of claims 1 to 4, wherein the polyether carbonate polyol is a polyether carbonate triol or a polyether carbonate diol.

6. The mixture according to any one of claims 1 to 5, wherein the number average molecular weight of the polyether carbonate polyol ranges from 500 to 20,000 Da.

7. The mixture according to any one of claims 1 to 6, wherein the polypropylene carbonate is the resulting product of copolymerizing $CO_2$ with propylene oxide in the presence of a catalyst.

8. The mixture according to any one of claims 1 to 7, wherein the polypropylene carbonate has formula:

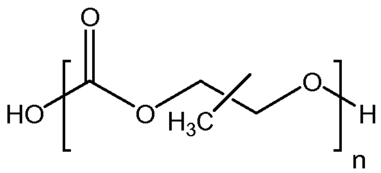

wherein n is an integer ranging from 5 to 150.

9. The mixture according to any one of claims 1 to 8, wherein the polypropylene carbonate has on average more than about 80% of adjacent monomer units connected via carbonate linkages.

10. The mixture according to any one of claims 1 to 9, wherein the polypropylene carbonate has a number average molecular weight lower than 15,000 Da and a weight average molecular weight lower than 17,000 Da.

11. The mixture according to any one of claims 1 to 10, wherein the polypropylene carbonate is comprised in the mixture in a weight proportion between 5 and 45 wt%, with respect to the total weight of the mixture.

12. The mixture according to any one of claims 1 to 10, which has $Tg_1$' ranging from -25° to -65°C.

13. A process for the preparation of a polyurethane formulation, said process comprises the reaction of a mixture as defined in any one of claims 1 to 12 with one or more polyisocyanate compounds.

14. A polyurethane formulation obtainable by the process as defined in claim 13.

15. Use of the polyurethane formulation as defined in claim 14 in the preparation of CASE applications, a thermoplastic polyurethane or a polyurethane foam.

## Patentansprüche

1. Mischung, umfassend:

   a) Polyethercarbonat-Polyol mit einem Gehalt an $CO_2$ in seiner chemischen Struktur im Bereich von 0,5 bis 30 Gew.%, basierend auf dem Gesamtgewicht des Polyethercarbonat-Polyols; und
   b) Polypropylencarbonat;

   wobei die Mischung umfasst:

   a) wenigstens 25 Gew.% des Polyethercarbonat-Polyols mit einem Gehalt an $CO_2$ in seiner chemischen Struktur im Bereich von 0,5 bis 30 Gew.%, basierend auf dem Gesamtgewicht des Polyethercarbonat-Polyols; und
   b) 75 Gew.% oder weniger des Polypropylencarbonats.

2. Mischung nach Anspruch 1, umfassend:

   a) wenigstens 50 Gew.% an Polyethercarbonat-Polyol mit einem Gehalt an $CO_2$ in seiner chemischen Struktur im Bereich von 5 bis 25 Gew.%, basierend auf dem Gesamtgewicht des Polyethercarbonat-Polyols; und
   b) 50 Gew.% oder weniger an Polypropylencarbonat.

3. Mischung nach einem der Ansprüche 1 und 2, wobei das Polyethercarbonat-Polyol von 5 bis 25 Gew.% Kohlendioxid aufweist, basierend auf dem Gesamtgewicht des Polyethercarbonat-Polyols.

4. Mischung nach einem der Ansprüche 1 bis 3, wobei das Polyethercarbonat-Polyol erhältlich ist durch ein Verfahren, umfassend das Copolymerisieren von einer oder mehreren H-funktionellen Initiator-Substanzen, einem oder mehreren Alkylenoxiden und Kohlendioxid in der Anwesenheit eines Doppelmetallcyanid-Katalysators, wobei der Doppelmetallcyanid-Katalysator durch ein Verfahren erhalten wird, umfassend:

a) Synthetisieren eines festen Doppelmetallcyanid-Katalysators in der Anwesenheit eines organischen Komplexmittels und eines Polyether-Polyol-Liganden; und
b) zuerst Waschen des in Schritt a) erhaltenen Katalysators mit einer wässrigen Lösung umfassend:

- 90-100 Gew.% Wasser; und
- 0-10 Gew.% Polyetherpolyol-Liganden,

um einen Schlamm zu bilden, wobei die wässrige Lösung kein organisches Komplexmittel außer dem Polyether-Polyol-Liganden enthält.

**5.** Mischung nach einem der Ansprüche 1 bis 4, wobei das Polyethercarbonat-Polyol ein Polyethercarbonat-Triol oder ein Polyethercarbonat-Diol ist.

**6.** Mischung nach einem der Ansprüche 1 bis 5, wobei das zahlenmittlere Molekulargewicht des Polyethercarbonat-Polyols im Bereich von 500 bis 20.000 Da liegt.

**7.** Mischung nach einem der Ansprüche 1 bis 6, wobei das Polypropylencarbonat das resultierende Produkt einer Copolymerisierung von $CO_2$ mit Propylenoxid in der Anwesenheit eines Katalysators ist.

**8.** Mischung nach einem der Ansprüche 1 bis 7, wobei das Polypropylencarbonat folgende Formel hat:

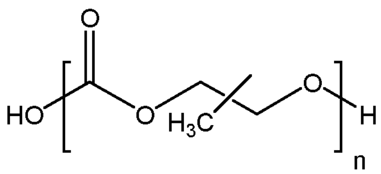

wobei n eine ganze Zahl im Bereich von 5 bis 150 ist.

**9.** Mischung nach einem der Ansprüche 1 bis 8, wobei das Polypropylencarbonat durchschnittlich mehr als ungefähr 80% aneinandergrenzende Monomereinheiten hat, die über Carbonatverknüpfungen verbunden sind.

**10.** Mischung nach einem der Ansprüche 1 bis 9, wobei das Polypropylencarbonat ein zahlenmittleres Molekulargewicht von weniger als 15.000 Da und ein gewichtsmittleres Molekulargewicht von weniger als 17.000 Da hat.

**11.** Mischung nach einem der Ansprüche 1 bis 10, wobei das Polypropylencarbonat in der Mischung in einem Gewichtsverhältnis zwischen 5 und 45 Gew.% enthalten ist, bezogen auf das Gesamtgewicht der Mischung.

**12.** Mischung nach einem der Ansprüche 1 bis 10, die eine $Tg_1$' im Bereich von -25° bis -65°C hat.

**13.** Verfahren zur Herstellung einer Polyurethanformulierung, wobei das Verfahren die Reaktion einer Mischung, wie in einem der Ansprüche 1 bis 12 definiert, mit einer oder mehreren Polyisocyanatverbindungen umfasst.

**14.** Polyurethanformulierung, erhältlich durch das Verfahren, wie in Anspruch 13 definiert.

**15.** Verwendung der Polyurethanformulierung, wie in Anspruch 14 definiert, zur Herstellung von CASE-Anwendungen, eines thermoplastischen Polyurethans oder eines Polyurethanschaums.

## Revendications

**1.** Un mélange comprenant :

a) du polyéther carbonate polyol ayant une teneur en $CO_2$ dans sa structure chimique allant de 0,5 à 30% en poids, par rapport au poids total du polyéther carbonate polyol ; et
b) du carbonate de polypropylène ;

ledit mélange comprenant :

a) au moins 25% en poids de polyéther carbonate polyol ayant une teneur en $CO_2$ dans sa structure chimique allant de 0,5 à 30% en poids, par rapport au poids total du polyéther carbonate polyol ; et
b) égal ou inférieur à 75% en poids de carbonate de polypropylène.

**2.** Le mélange selon la revendication 1 comprenant :

a) au moins 50% en poids de polyéther carbonate polyol ayant une teneur en $CO_2$ dans sa structure chimique allant de 5 à 25% en poids, par rapport au poids total du polyéther carbonate polyol ; et
b) égal ou inférieur à 50% en poids de carbonate de polypropylène ou moins.

**3.** Le mélange selon l'une quelconque des revendications 1 et 2, dans lequel le polyéther carbonate polyol a de 5 à 25% en poids de dioxyde de carbone, par rapport au poids total du polyéther carbonate polyol.

**4.** Le mélange selon l'une quelconque des revendications 1 à 3, dans lequel le polyéther carbonate polyol est apte à être obtenu par un procédé comprenant le fait de co-polymériser une ou plusieurs substances initiatrices à fonction H, un ou plusieurs oxydes d'alkylène et du dioxyde de carbone en présence d'un catalyseur au cyanure métallique double, ledit catalyseur au cyanure métallique double étant obtenu par un procédé comprenant :

a) le fait de synthétiser un catalyseur de cyanure métallique double solide en présence d'un agent complexant organique et d'un ligand polyéther polyol ; et
b) le fait de, tout d'abord, laver le catalyseur obtenu à l'étape a) avec une solution aqueuse comprenant :

- de 90 à 100% en poids d'eau ; et
- de 0 à 10% en poids d'un ligand polyéther polyol,

pour former une suspension, la solution aqueuse ne contenant aucun agent complexant organique autre que le ligand polyéther polyol.

**5.** Le mélange selon l'une quelconque des revendications 1 à 4, dans lequel le polyéther carbonate polyol est un polyéther carbonate triol ou un polyéther carbonate diol.

**6.** Le mélange selon l'une quelconque des revendications 1 à 5, dans lequel le poids moléculaire moyen en nombre du polyéther carbonate polyol est compris entre 500 et 20000 Da.

**7.** Le mélange selon l'une quelconque des revendications 1 à 6, dans lequel le carbonate de polypropylène est le produit résultant de la copolymérisation du $CO_2$ avec de l'oxyde de propylène en présence d'un catalyseur.

**8.** Le mélange selon l'une quelconque des revendications 1 à 7, dans lequel le carbonate de polypropylène a la formule :

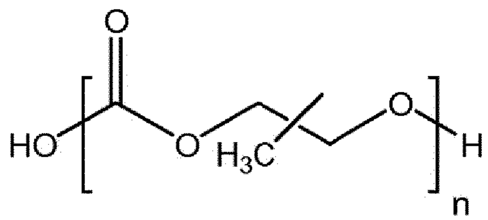

dans laquelle n est un entier allant de 5 à 150.

**9.** Le mélange selon l'une quelconque des revendications 1 à 8, dans lequel le carbonate de polypropylène a en moyenne plus d'environ 80% d'unités monomères adjacentes reliées par des liaisons carbonate.

**10.** Le mélange selon l'une quelconque des revendications 1 à 9, dans lequel le carbonate de polypropylène a un poids moléculaire moyen en nombre inférieur à 15000 Da et un poids moléculaire moyen en poids inférieur à 17000 Da.

**11.** Le mélange selon l'une quelconque des revendications 1 à 10, dans lequel le carbonate de polypropylène est compris dans le mélange dans une proportion pondérale comprise entre 5 et 45% en poids, par rapport au poids total du mélange.

**12.** Le mélange selon l'une quelconque des revendications 1 à 10, qui a une $Tg_1$' allant de -25° à -65°C.

**13.** Un procédé de préparation d'une formulation de polyuréthanne, ledit procédé comprenant la réaction d'un mélange tel que défini dans l'une quelconque des revendications 1 à 12 avec un ou plusieurs composés polyisocyanates.

**14.** Une formulation de polyuréthane apte à être obtenue par le procédé tel que défini dans la revendication 13.

**15.** Utilisation de la formulation de polyuréthane telle que définie à la revendication 14 dans la préparation d'applications CASE, d'un polyuréthane thermoplastique ou d'une mousse de polyuréthane.

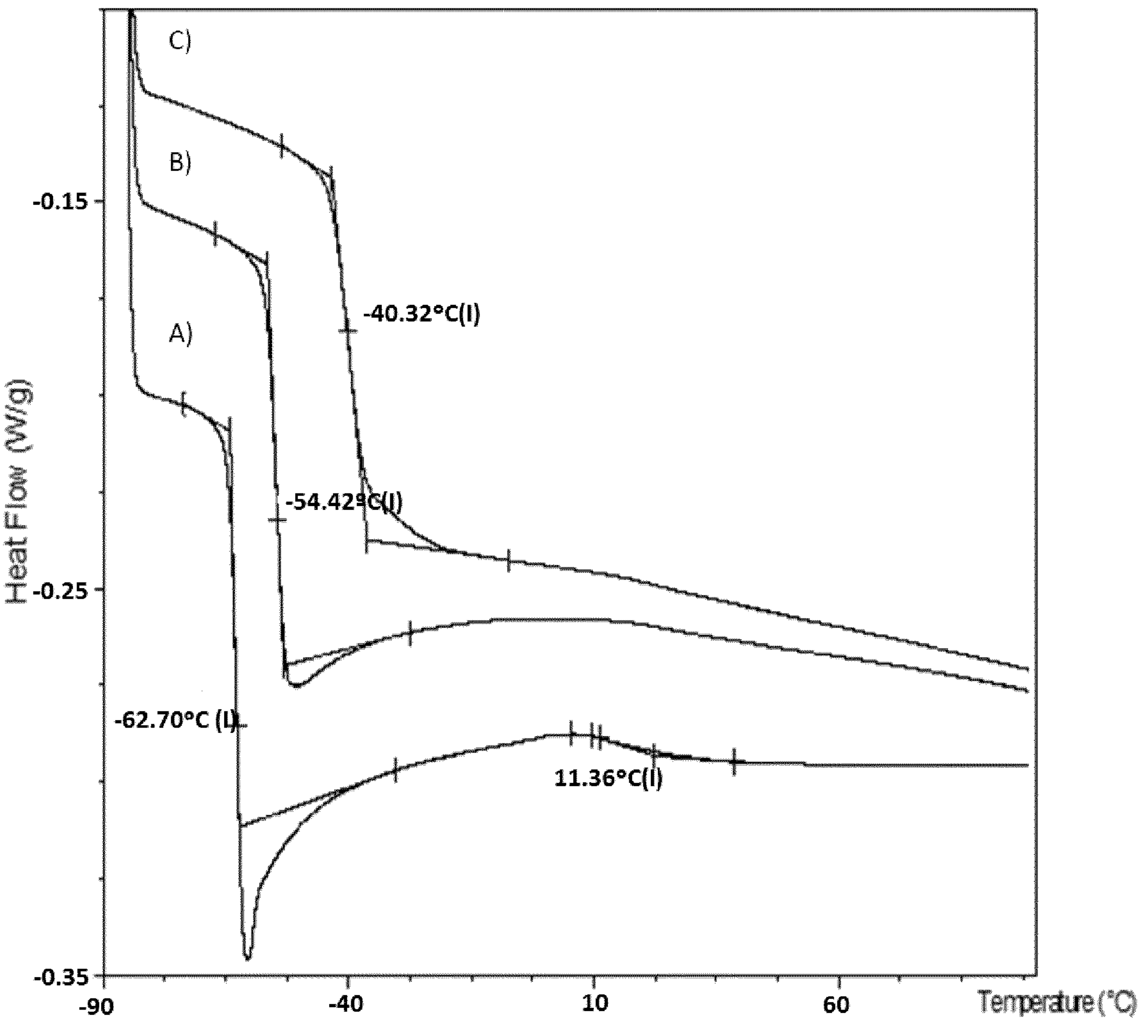
C)
B)
A)
-0.15
-0.25
-0.35
Heat Flow (W/g)
-40.32°C(I)
-54.42°C(I)
-62.70°C (I)
11.36°C(I)
-90
-40
10
60
Temperature (°C)

Figure 1

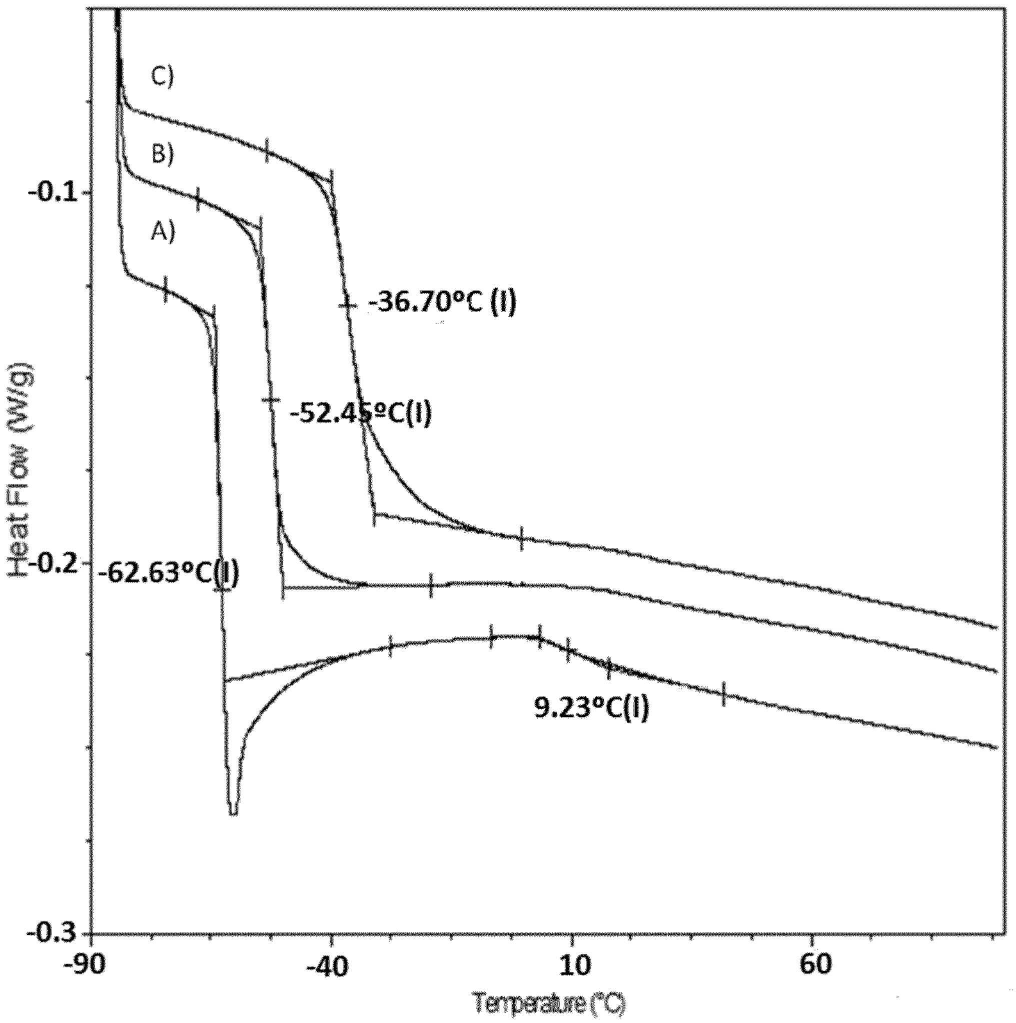
C)
B)
A)
-0.1
-0.2
-0.3
Heat Flow (W/g)
-36.70°C (I)
-52.45ºC(I)
-62.63°C(I)
9.23°C(I)
-90
-40
10
60
Temperature (°C)

Figure 2

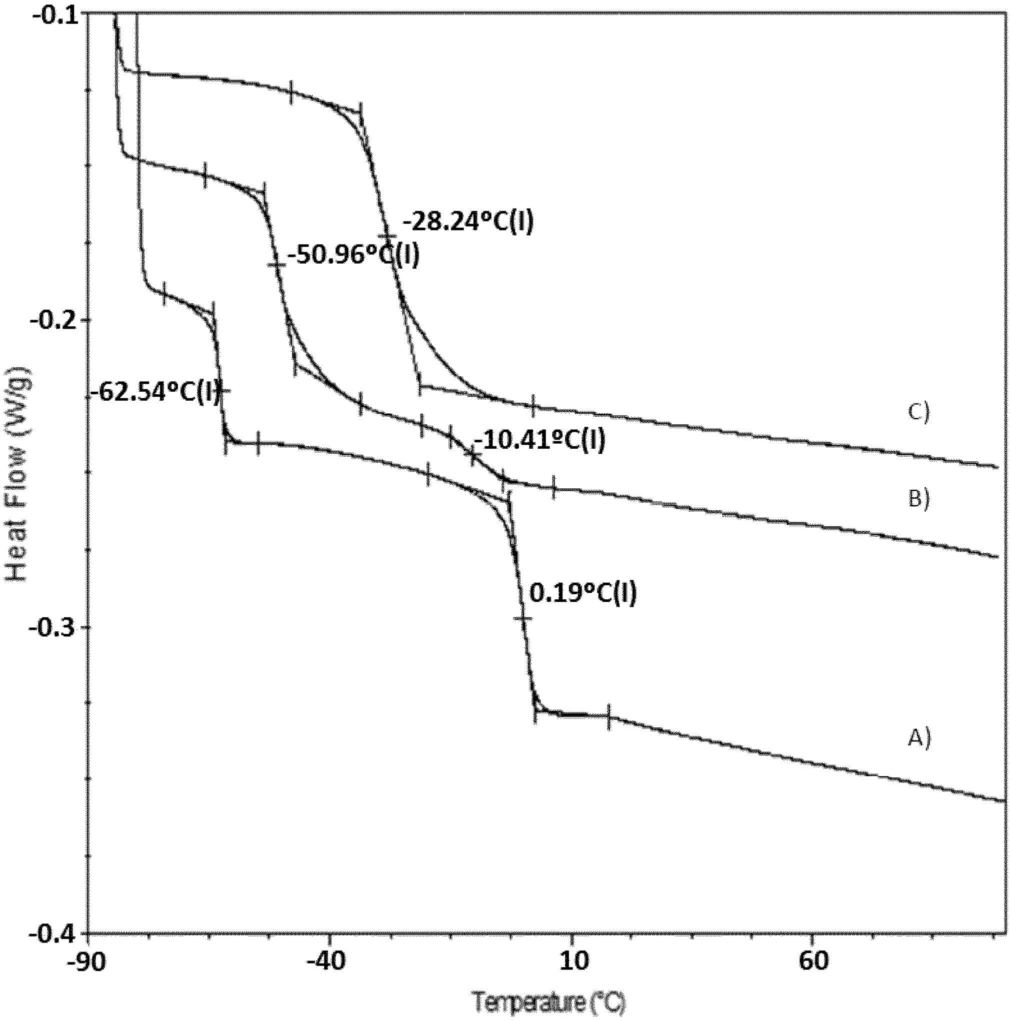
-0.1
-0.2
-0.3
-0.4
Heat Flow (W/g)
-90
-40
10
60
Temperature (°C)
-28.24°C(I)
-50.96°C(I)
-62.54°C(I)
-10.41ºC(I)
0.19°C(I)
C)
B)
A)

Figure 3

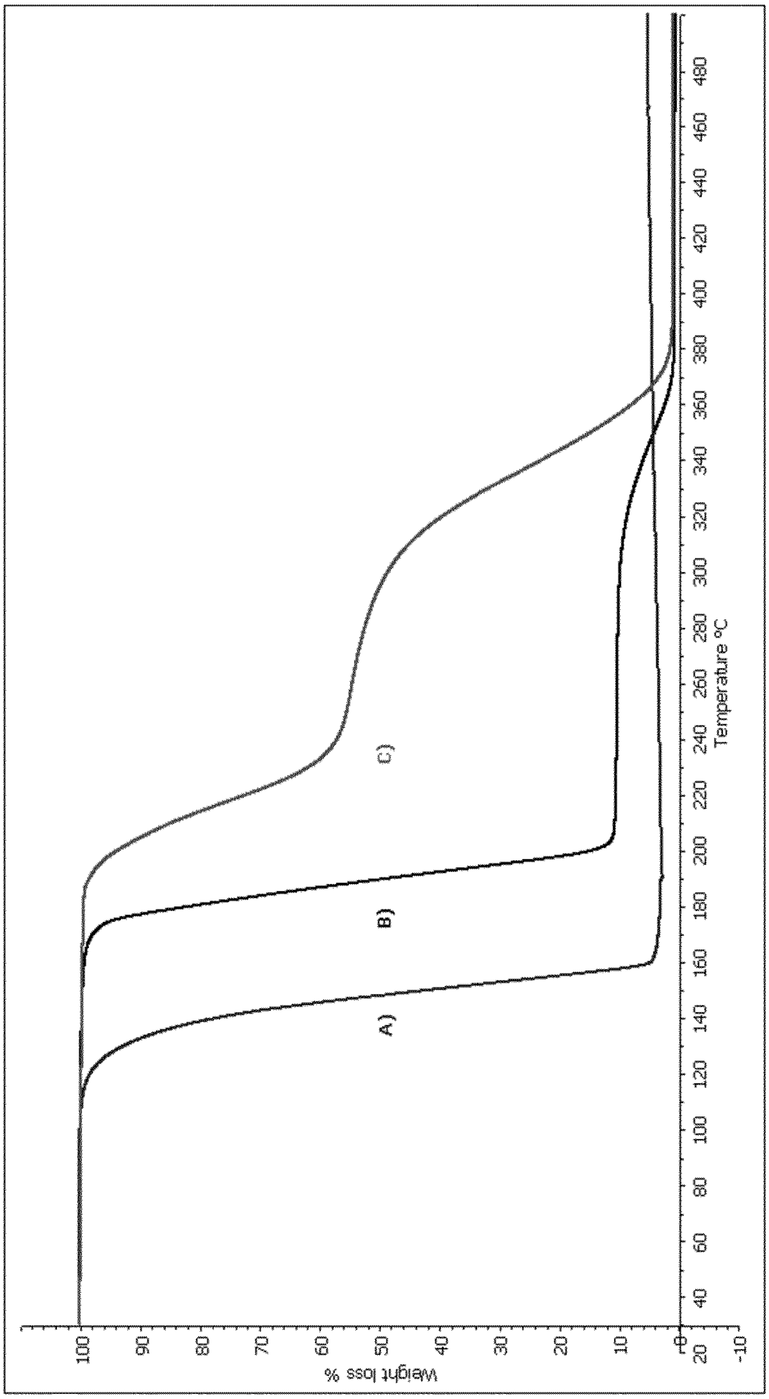
Weight loss %
Temperature °C
A)
B)
C)
100
90
80
70
60
50
40
30
20
10
0
-10
20
40
60
80
100
120
140
160
180
200
220
240
260
280
300
320
340
360
380
400
420
440
460
480

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013138161 A
- EP 2548908 A
- US 2013123532 A
- EP 2441788 A
- US 2003149323 A
- WO 2013016331 A
- WO 2013158621 A
- US 5158922 A
- WO 2010022388 A
- WO 2010028362 A
- WO 2012071505 A
- US 8507708 B
- US 4789727 A
- WO 2012156431 A
- WO 2015022290 A


### Non-patent literature cited in the description


- *Angew. Chem. Int.,* 2003, vol. 42, 5484-5487
- *Angew. Chem. Int.,* 2004, vol. 43, 6618-6639
- *Macromolecules,* 2010, vol. 43, 7398-7401
- *Bull. Am. Phys. Soc.,* 1956, vol. 1, 123